# EUROPEAN PATENT SPECIFICATION

(11) **EP 4 510 214 B1**
(45) Date of publication and mention of the grant of the patent: **28.10.2026**
(21) Application number: 23853067.9
(22) Date of filing: 11.08.2023
(51) Int. Cl.: H01M 4/131, H01M 4/525, H01M 4/1391, H01M 4/04, H01M 10/0525, H01M 4/134, H01M 4/36, H01M 4/38, H01M 4/505, H01M 4/62

(54) **POSITIVE ELECTRODE, METHOD OF PREPARING THE POSITIVE ELECTRODE, AND LITHIUM SECONDARY BATTERY INCLUDING THE POSITIVE ELECTRODE**
POSITIVELEKTRODE, METHODE ZUR HERSTELLUNG DER POSITIVELEKTRODE UND LITHIUMSEKUNDÄRBATTERIE BEINHALTEND DIE POSITIVELEKTRODE
ÉLECTRODE POSITIVE, PROCÉDÉ DE PRÉPARATION DE L'ÉLECTRODE POSITIVE, ET BATTERIE SECONDAIRE AU LITHIUM COMPRENANT L'ÉLECTRODE POSITIVE

(30) Priority: 12.08.2022 KR 20220101636
(43) Date of publication of application: 19.02.2025
(73) Proprietor: LG Energy Solution, Ltd., Seoul 07335 (KR)
(72) Inventor: JEON, Seo Young, Daejeon 34122 (KR); JOO, Mun Kyu, Daejeon 34122 (KR); LEE, Il Ha, Daejeon 34122 (KR); CHAE, Jong Hyun, Daejeon 34122 (KR); KWON, Yo Han, Daejeon 34122 (KR); KOO, Dae Ryung, Daejeon 34122 (KR)
(74) Representative: Hoffmann Eitle
(86) International application number: PCT/KR2023/011928
(87) International publication number: WO 2024/035201

(56) References cited:
- WO-A1-2022/105259
- JP-A- 2021 114 409
- JP-A- 2021 528 808
- KR-A- 20180 104 174
- KR-A- 20200 127 893
- LIU ZONGZHE, MA SHAOBO, MU XUE, LI RENLONG, YIN GEPING, ZUO PENGJIAN: "A Scalable Cathode Chemical Prelithiation Strategy for Advanced Silicon-Based Lithium Ion Full Batteries", APPLIED MATERIALS & INTERFACES, AMERICAN CHEMICAL SOCIETY, US, vol. 13, no. 10, 17 March 2021 (2021-03-17), US , pages 11985 - 11994, XP093138160, ISSN: 1944-8244, DOI: 10.1021/acsami.0c22880
- WU YUNWEN; YOKOSHIMA TOKIHIKO; NARA HIROKI; MOMMA TOSHIYUKI; OSAKA TETSUYA: "A pre-lithiation method for sulfur cathode used for future lithium metal free full battery", JOURNAL OF POWER SOURCES, ELSEVIER, AMSTERDAM, NL, vol. 342, 30 December 2016 (2016-12-30), AMSTERDAM, NL, pages 537 - 545, XP029895630, ISSN: 0378-7753, DOI: 10.1016/j.jpowsour.2016.12.101

## Description

### TECHNICAL FIELD

### Cross-reference to Related Application

This application claims priority from Korean Patent Application No. 10-2022-0101636, filed on August 12, 2022.

### Technical Field

The present disclosure relates to an overlitiated positive electrode, a method of preparing the positive electrode, and a lithium secondary battery including the positive electrode.

### BACKGROUND ART

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for ion secondary batteries as an energy source has been significantly increased as technology development and demand with respect to portable devices, such as portable computers, mobile phones, and cameras, have increased, and, among these secondary batteries, lithium ion secondary batteries having high energy density, i.e., high capacity have been subjected to considerable research and have been commercialized and widely used.

In general, a lithium ion secondary battery is composed of a positive electrode, a negative electrode, an electrolyte, and a separator. The negative electrode includes a negative electrode active material in which lithium ions released from the positive electrode are intercalated and deintercalated, and silicon-based active material particles having large discharge capacity may be used as the negative electrode active material. The silicon-based active material particle may correspond to silicon (Si) or SiOₓ (0<x<2). The silicon-based active material particle has an advantage of large theoretical capacity and low price. However, since the silicon-based active material particle has an excessively large volume change during battery operation, it is disadvantageous in that lifetime of the battery is rapidly decreased as the battery is cycled.

Thus, in order to minimize the volume change of the silicon-based active material particle, there is a method of using only a portion of total capacity of the silicon-based active material particles. For this purpose, a so-called pre-lithiation process is used in which lithium ions are intercalated into the negative electrode including the silicon-based active material particles in advance. Specifically, if the lithium ions are intercalated into the negative electrode by a method such as transferring lithium metal to the negative electrode, total capacity of the negative electrode may be reduced to a level of reversible capacity as the lithium ions react at irreversible sites of the negative electrode. Thus, since an amount of the lithium ions intercalated during battery operation may be suitably reduced to a level required for the battery operation, the volume change of the silicon-based active material particles may be minimized.

However, in the process of performing pre-lithiation by disposing the lithium metal on a surface of the negative electrode, excessive heat is generated due to an alloy reaction between lithium and silicon, and a possibility of ignition due to a reaction between the lithium and moisture also increases. Also, in a process of notching and punching the negative electrode, a reaction area between the lithium and the silicon-based active material may be increased to further increase the possibility of ignition.

There is also a possibility of ignition caused by the pre-lithiated silicon-based active material particles.

Therefore, there is a need for a new technique which may suppress the possibility of excessive heat generation and ignition while improving the lifetime of the battery by intercalating lithium ions into the negative electrode in advance before battery operation. JP 2021 114409 A describes a positive electrode active material for an all-solid-state lithium-ion battery including a layer-structured lithium nickel cobalt manganese transition metal composite oxide having a ratio I₀₀₃/I₁₀₄ of 1.23 or more. WO 2022/105259 A1 describes a positive electrode lithium supplement comprising an oxide-type positive electrode active material and a lithium-rich material.

### DISCLOSURE OF THE INVENTION

### TECHNICAL PROBLEM

An aspect of the present disclosure provides a positive electrode in which energy density and life characteristics of a battery may be improved and safety in a battery preparation process may be improved.

Another aspect of the present disclosure provides a method of preparing the positive electrode.

Another aspect of the present disclosure provides a lithium secondary battery including the positive electrode.

### TECHNICAL SOLUTION

According to an aspect of the present disclosure, there is provided a positive electrode which includes a positive electrode active material layer including a positive electrode active material, and satisfies Equation 1. [Equation 1] $1.2 \leq {I}_{\left[003\right]} {/ I}_{\left[200\right]} \leq 2.0$

In Equation 1, I_{[003]} is an integral value of a maximum peak that appears in a 2θ range of 17.0° to 19.0° during X-ray diffraction (XRD) measurement on a surface of the positive electrode active material layer, and I_{[200]} is an integral value of a maximum peak that appears in a 2θ range of 43° to 45° during the XRD measurement on the surface of the positive electrode active material layer, wherein I_{[003]} and I_{[200]} are measured as described in the specification, wherein the positive electrode active material comprises a layer-structured lithium nickel-based transition metal composite oxide, and the lithium nickel-based transition metal composite oxide comprises a compound of Formula 1.

[Formula 1] Li₁₊ₓ[NiₐCo_{b}Mn_{c}M¹_{(1-a-b-c)}]O_{(2-d)}A_{d}

wherein, in Formula 1,
M¹ is at least one selected from the group consisting of aluminum (Al), magnesium (Mg), chromium (Cr), titanium (Ti), silicon (Si), and yttrium (Y),
A is at least one selected from the group consisting of fluorine (F), phosphorus (P), and chlorine (Cl), and -0.5≤x≤0.5, 0.6≤a<1, 0.03≤b≤0.1, 0.03≤c≤0.1, 0≤d≤0.1, and 0<a+b+c≤1.

According to another aspect of the present disclosure, there is provided a method of preparing the positive electrode of the aforementioned aspect which includes: a step P1 of disposing a transfer stack, which includes a base film and a lithium metal layer disposed on the base film, on a preliminary positive electrode including a preliminary positive electrode active material layer to form a positive electrode structure such that the lithium metal layer and the preliminary positive electrode active material layer are in contact with each other; a step P2 of rolling the positive electrode structure; and a step P3 of removing the base film from the transfer stack after the rolling, wherein a pressure applied to the positive electrode structure during the rolling is in a range of 10 kgf/cm to 90 kgf/cm.

According to another aspect of the present disclosure, there is provided a lithium secondary battery including a positive electrode; a negative electrode; a separator disposed between the positive electrode and the negative electrode; and an electrolyte, wherein the positive electrode is the positive electrode of the aforementioned aspect.

According to another aspect of the present disclosure, there is provided a method of preparing a lithium ion secondary battery which includes: a step B1 of preparing a preliminary lithium ion secondary battery which includes a positive electrode; a negative electrode; a separator disposed between the positive electrode and the negative electrode; and an electrolyte; and a step B2 of activating the preliminary lithium ion secondary battery, wherein a method of preparing the positive electrode includes: a step P1 of disposing a transfer stack, which includes a base film and a lithium metal layer disposed on the base film, on a preliminary positive electrode including a preliminary positive electrode active material layer to form a positive electrode structure such that the lithium metal layer and the preliminary positive electrode active material layer are in contact with each other; a step P2 of rolling the positive electrode structure; and a step P3 of removing the base film from the transfer stack after the rolling, wherein a pressure applied to the positive electrode structure during the rolling is in a range of 10 kgf/cm to 90 kgf/cm.

### ADVANTAGEOUS EFFECTS

In a positive electrode according to the present disclosure, a lithium metal layer is disposed on the positive electrode through a transfer method, and lithium ions of the lithium metal layer are intercalated into a positive electrode active material layer by a rolling process that applies an appropriate level of pressure. Accordingly, the positive electrode satisfies Equation 1 above. If a preliminary lithium ion secondary battery is prepared by using the positive electrode that is prepared by the method as described above and the preliminary lithium ion secondary battery is activated, since the lithium ions intercalated into the positive electrode are transferred to a negative electrode, the lithium ions react and fill irreversible sites of the negative electrode. Accordingly, an amount of the lithium ions intercalated into the negative electrode during battery operation may be suitably reduced to a level required for the battery operation. Thus, since an available range of negative electrode capacity may be reduced while maintaining capacity of the battery, an excessive volume change of silicon-based active material particles may be suppressed and life characteristics of the battery may be improved.

Also, since pre-lithiation is not performed by contacting the lithium metal layer to the negative electrode, but the lithium metal layer is transferred to the positive electrode and rolled and the lithium ions intercalated into the positive electrode are then transferred to the negative electrode in an activation process of the battery, a phenomenon of excessive heat generation due to an alloy reaction of lithium and silicon at the negative electrode may be avoided and a possibility of ignition due to a reaction between the lithium and moisture may be significantly reduced. Furthermore, since the lithium ions are not intercalated into the negative electrode during notching and punching the negative electrode (because the pre-lithiation has not progressed), a possibility of ignition during the notching and punching process may be significantly reduced.

Particularly, since the lithium ions of the lithium metal layer are intercalated into the positive electrode active material layer at the appropriate level of pressure during the preparation of the positive electrode, a degree of cracking of a positive electrode active material may be reduced, and thus, the life characteristics of the lithium ion secondary battery are improved and energy density may be improved. Also, since lithium side reaction products may be reduced, an amount of lithium loss may be reduced, and thus, long-term life characteristics of the battery may be improved.

### BRIEF DESCRIPTION OF THE DRAWINGS

FIG. 1 is a schematic view illustrating step P1 in a method of preparing a positive electrode according to an aspect of the present disclosure.
FIG. 2 is a schematic view illustrating step P1 using a transfer stack including a polymer layer in the method of preparing a positive electrode according to the aspect of the present disclosure.
FIG. 3 is a schematic view illustrating step P2 in the method of preparing a positive electrode according to the aspect of the present disclosure.
FIG. 4 is a schematic view illustrating step P3 in the method of preparing a positive electrode according to the aspect of the present disclosure.
FIG. 5 is an X-ray diffraction (XRD) measurement result graph of a positive electrode of Example 1-1 of the present disclosure.
FIG. 6 is an XRD measurement result graph of a positive electrode of Example 1-2 of the present disclosure.
FIG. 7 is an XRD measurement result graph of a positive electrode of Comparative Example 1-2 of the present disclosure.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the disclosure, based on the principle that an inventor may properly define the meaning of the words or terms to best explain the disclosure.

The terminology used herein is for the purpose of describing particular example aspects only and is not intended to be limiting of the present disclosure. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

D₅₀ in the present specification may be defined as a particle diameter at a cumulative volume of 50% in a particle size distribution curve. The D₅₀, for example, may be measured by using a laser diffraction method. The laser diffraction method may generally measure a particle diameter ranging from a submicron level to a few mm and may obtain highly repeatable and high-resolution results.

X-ray diffraction (XRD) measurement in this specification was performed as follows.

An X-ray wavelength generated from copper (Cu) Kα was used, and a wavelength (λ) of a light source was 0.15406 nm.
1) Measurement Device and Conditions: Bruker D8 Endeavor (Cu target 40kV, 40mA, 1.54 Å) LynxEye position sensitive detector (4.1° slit)
2) Experimental Process
   2-1) Prep. Cutting/Cross-section: Make a specimen by cutting a sample to a size of a sample holder.
   2-2) Prep. Sample Mounting: Attach the sample (positive electrode) to a glass plate using a double-sided tape such that there is no gap therebetween and then mount it using rubber clay and a holder formed of PMMA.
   2-3) Powder XRD (Bruker D8 Endeavor): Adjust a fixed divergence slit (FDS) to 0.5° according to a sample size, and powder XRD is measured every 0.0156° for 0.3 seconds in a 2θ range of 10° to 125°.
   2-4) XRD Phase Analysis: Identify phases present in the sample by comparing them with database (PDF).
   2-5) Rietveld Analysis: Rietveld refinement is performed using a complete structure model of the phases present in the sample.

### <Positive Electrode>

A positive electrode according to an aspect of the present disclosure includes a positive electrode active material layer including a positive electrode active material, and may satisfy Equation 1 below. [Equation 1] $1.2 \leq {I}_{\left[003\right]} {/ I}_{\left[200\right]} \leq 2.0$

In Equation 1, I_{[003]} is an integral value of a maximum peak that appears in a 2θ range of 17.0° to 19.0° during XRD measurement on a surface of the positive electrode active material layer, and I_{[200]} is an integral value of a maximum peak that appears in a 2θ range of 43° to 45° during the XRD measurement on the surface of the positive electrode active material layer.

The positive electrode may include a positive electrode active material layer. The positive electrode active material layer may itself constitute the positive electrode, but the positive active material layer may be disposed on a positive electrode collector.

The positive electrode collector is not particularly limited as long as it has conductivity without causing adverse chemical changes in a battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

The positive electrode active material layer may be disposed on one surface or both surfaces of the positive electrode collector. The positive electrode active material layer may include a positive electrode active material.

The positive electrode active material is a material in a form of a particle which may cause an electrochemical reaction, wherein it may be a lithium transition metal oxide. For example, the positive electrode active material may include at least one selected from the group consisting of a layered compound, such as a lithium cobalt oxide or a lithium nickel oxide, which is substituted with at least one transition metal; a lithium manganese oxide substituted with at least one transition metal; a lithium nickel cobalt manganese composite oxide represented by Li₁₊ₓ[NiₐCo_{b}Mn_{c}M¹_{(1-a-b-c)}]O_{(2-d)}A_{d} (where, M¹ is at least one selected from the group consisting of aluminum (Al), magnesium (Mg), chromium (Cr), titanium (Ti), silicon (Si), and yttrium (Y), A is at least one selected from the group consisting of fluorine (F), phosphorus (P), and chlorine (Cl), and -0.5≤x≤0.5, 0.1≤a≤1, 0.05≤b≤0.5, 0.05≤c≤0.5, 0≤d ≤0.2, and 0<a+b+c≤1) ; a lithium nickel-based oxide represented by Li[Ni_{1-y}M²_{y}]O₂ (where, M² may be at least one selected from cobalt (Co), manganese (Mn), Al, copper (Cu), iron (Fe), Mg, boron (B), Cr, zinc (Zn), and gallium (Ga), and 0.01≤y≤0.7); and an olivine-based lithium metal phosphate represented by Li_{1+z}[M³_{1-q}M⁴_{q}]PO₄₋ᵣXᵣ (where, M³ is at least one selected from the group consisting of Fe, Mn, Co, and nickel (Ni), M⁴ is at least one selected from the group consisting of Al, Mg, and Ti, X is at least one selected from the group consisting of F, sulfur (S), and nitrogen (N), and -0.5≤z≤0.5, 0≤q≤0.5, and 0≤r≤0.1).

Specifically, the positive electrode active material of the present invention includes a layer-structured lithium nickel-based transition metal composite oxide, and the lithium nickel-based transition metal composite oxide includes a compound of Formula 1 below and may more specifically be the compound of Formula 1 below.

[Formula 1] Li₁₊ₓ [NiₐCo_{b}Mn_{c}M¹_{(1-a-b-c)}]O_{(2-d)}A_{d}

In Formula 1, M¹ is at least one selected from the group consisting of Al, Mg, Cr, Ti, Si, and Y, and may specifically be Al.

A is at least one selected from the group consisting of F, P, And Cl, and may specifically be F.
x satisfies -0.5≤x≤0.5, specifically, -0.3≤x≤0.3.
a satisfies 0.6≤a<1, specifically, 0.7≤a≤0.9.
b satisfies 0.03≤b≤0.1, specifically, 0.05≤b≤0.1.
c satisfies 0.03≤c≤0.1, specifically, 0.05≤c≤0.1.
d satisfies 0≤d≤0.1, specifically, 0≤d≤0.05.
a, b, and c satisfy 0<a+b+c≤1, specifically, a+b+c=1.

The compound of Formula 1 may be in the form of a particle.

The layer-structured lithium nickel-based transition metal composite oxide may be in a form of a secondary particle in which a plurality of primary particles are bonded to each other. Specifically, the compound of Formula 1 may be in the form of a secondary particle in which 10 or more primary particles are bonded to each other. Accordingly, there is an effect that lithium may be uniformly intercalated into and deintercalated from the positive electrode active material.

The lithium nickel-based transition metal composite oxide may have a D₅₀ of 5 µm to 15 µm, particularly 7 µm to 12 µm, and more particularly 9 µm to 10 µm. The D₅₀ may be a D₅₀ of the secondary particle. Since a positive electrode slurry is easily dispersed when the above range is satisfied, uniform coating of the positive electrode active material layer is possible.

The positive electrode active material may be included in an amount of 90 wt% to 99 wt%, particularly 92 wt% to 98 wt%, and more particularly 95 wt% to 98 wt% in the positive electrode active material layer.

The positive electrode active material layer may further include a positive electrode binder. The positive electrode binder improves adhesion between the positive electrode active material particles and adhesion between the positive electrode active material and the positive electrode collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used.

The positive electrode binder may be included in an amount of 0.5 wt% to 5.0 wt%, particularly 1.0 wt% to 2.5 wt%, and more particularly 1.0 wt% to 2.0 wt% in the positive electrode active material layer.

The positive electrode active material layer may further include a positive electrode conductive agent. The positive electrode conductive agent is used to provide conductivity to the electrode, wherein any conductive agent may be used without particular limitation as long as it has suitable electron conductivity without causing adverse chemical changes in the battery. Specific examples of the positive electrode conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The positive electrode conductive agent may be included in an amount of 0.5 wt% to 30.0 wt%, particularly 0.5 wt% to 10.0 wt%, and more particularly 1.0 wt% to 4.0 wt% in the positive electrode active material layer.

The positive electrode active material layer may further include a lithium by-product. The lithium by-product corresponds to a by-product which is formed by transferring a lithium metal layer to the positive electrode active material layer and rolling in a preparation process of the positive electrode. Specifically, the positive electrode active material layer may include any one selected from the group consisting of Li₃N, Li₂CO₃, and LiOH.

Also, while the lithium metal layer is transferred to the positive electrode active material layer, a crystal structure of a portion of the positive electrode active material in the positive electrode active material layer may be changed due to overlithiation. Particularly, with respect to a layer-structured positive electrode active material represented by LiMO₂, a LiMO₂-type layered structure corresponding to space group R-3m is present, a Li₂MO₂-type layered structure corresponding to space group P-3m1(T1) is formed due to excess lithium, and a rock-salt structure corresponding to space group Fm-3m represented by MO may be formed. These crystal structures may be determined depending on rolling conditions and an amount of the lithium by-products generated by the overlithiation, and there is a need to appropriately adjust the amount of the lithium by-products and the rolling conditions to satisfy the following conditions in a graph derived by XRD as described below.

The positive electrode may satisfy Equation 1 below. [Equation 1] $1.2 \leq {I}_{\left[003\right]} {/ I}_{\left[200\right]} \leq 2.0$

In Equation 1, I_{[003]} is an integral value of a maximum peak that appears in a 2θ range of 17.0° to 19.0° during XRD measurement on a surface of the positive electrode active material layer, and specifically, the 2θ range where the maximum peak appears may be 17.5° to 18.5° and may be 17.5° to 18.2°. Also, I_{[200]} is an integral value of a maximum peak that appears in a 2θ range of 43° to 45° during the XRD measurement on the surface of the positive electrode active material layer, and the 2θ range where the maximum peak appears may be 43.5° to 44.5° and may be 43.7° to 44.3°.

Also, I_{[003]}/I_{[200]} of Equation 1 according to an aspect of the present disclosure may preferably be 1.21 or more, 1.22 or more, 1.23 or more, or 1.24 or more, and may preferably be 1.80 or less, 1.70 or less, 1.65 or less, 1.60 or less, or 1.58 or less.

With respect to I_{[003]}, it is a peak derived from the positive electrode active material corresponding to a layered structure of a hexagonal crystal corresponding to the space group R-3m, wherein an intensity of this peak may vary depending on a degree of overlithiation, a degree of phase transition to a rock-salt phase (Fm-3m), and a degree of generation of the lithium by-product, and I_{[200]} is a peak that appears due to a crystal structure transitioned to the rock-salt phase, wherein it may be determined by a degree to which the positive electrode active material is cracked by rolling, a degree to which the positive electrode active material is cracked by transfer of lithium, and a degree of generation of the lithium by-product.

In general, in a case in which I_{[003]} is large and I_{[200]} is small, it may be evaluated as a positive electrode active material with an excellent crystal structure, but, in a case in which overlithiation is performed, due to a rolling process required for the overlithiation, damage of the positive electrode active material which is caused by lithium transfer, and the lithium by-product generated on the surface, it is difficult to simply evaluate that having a large I_{[003]} value and a small I_{[200]} value is excellent, and it may be difficult to improve the value in a desired direction.

However, according to an aspect of the present disclosure, in a case in which a rolling pressure and a degree of overlithiation are adjusted during the preparation of the positive electrode to have the numerical range as described above, the most desirable performance may be achieved when comprehensively considering a degree of damage to the positive electrode active material particles, an increase or decrease in resistance due to the lithium by-product, or a capacity loss of the positive electrode active material due to the generation of the rock-salt phase.

In a process of preparing the positive electrode of the present disclosure, the lithium metal layer is transferred onto the positive electrode active material layer, and thereafter, a positive electrode including the lithium metal layer is rolled at a pressure of 10 kgf/cm to 90 kgf/cm so that lithium ions of the lithium metal layer are intercalated into the positive electrode active material layer. In this process, lithium by-products are generated by the lithium ions. That the positive electrode satisfies Equation 1 may be considered to mean that the lithium metal layer was transferred to the positive electrode active material layer and the positive electrode was rolled at a pressure of 10 kgf/cm to 90 kgf/cm during the preparation of the positive electrode of the present disclosure.

If the pressure during rolling is less than 10 kgf/cm, since the lithium metal layer of a transfer stack is not effectively transferred to the positive electrode during the preparation of the positive electrode, it difficult to intercalate lithium into the positive electrode at a desired level. For example, if the pressure during rolling is less than 10 kgf/cm, the I_{[003]}/I_{[200]} may be greater than 2.0. Accordingly, because an amount of lithium transferred to a negative electrode during an activation process is decreased and a large amount of the lithium by-products caused by a reaction with an electrolyte solution or air in the atmosphere is generated due to the lithium remaining on the surface without diffusing into the active material layer, there is no improvement in capacity due to an increase in amount of lithium loss, it is difficult to improve life characteristics of the battery, and resistance of the electrode may also be increased due to the by-product.

In contrast, if the pressure during rolling is greater than 90 kgf/cm, since a diffusion rate of the lithium is excessive, cracking of the positive electrode active material may excessively occur, and, accordingly, positive electrode capacity may be reduced and the life characteristics of the battery may be degraded. Also, even in this case, there is a problem of increase in the damaged positive electrode active material, a large amount of the lithium by-products may be formed due to a side reaction, in which a Li₂MO₂ crystal is decomposed into Li₂O and MO, to reduce the capacity of the positive electrode and degrade long-term life characteristics of the battery, and problems, such as a reduction in capacity, an increase in resistance, and a decrease in lifetime, may occur as the rock-salt phase is also increased. For example, if the pressure during rolling is greater than 90 kgf/cm, the I_{[003]}/I_{[200]} may be less than 1.2.

That is, in a case in which the positive electrode satisfies Equation 1 above, since sufficient lithium is supplied to the positive electrode, pre-lithiation of the negative electrode may proceed smoothly during battery activation, and there is an advantage in that the capacity of the positive electrode and the life characteristics of the battery are improved.

The positive electrode may further include a lithium metal layer which is disposed on the positive electrode active material layer. The lithium metal layer plays a role in supplying lithium ions to the positive electrode active material layer. Specifically, the positive electrode active material layer may be disposed between the positive electrode collector and the lithium metal layer. The lithium metal layer may be in contact with the positive electrode active material layer. The lithium metal layer includes solid-phase lithium metal, and the lithium metal layer may specifically be formed of solid-phase lithium metal.

The positive electrode may further include a polymer layer which is disposed on the positive electrode active material layer. The polymer layer may play a role in effectively peeling off the lithium metal layer from the transfer stack and allowing the lithium metal layer to be easily transferred to the positive electrode active material layer during the preparation of the positive electrode. That is, the polymer layer may be separated from the transfer stack together with the lithium metal layer to be disposed on the positive electrode active material layer. The polymer layer may exist in contact with the positive electrode active material layer, and alternatively, the lithium metal layer may exist between the polymer layer and the positive electrode active material layer.

The polymer layer may be at least one selected from the group consisting of polyethylene terephthalate (PET), polyimide (PI), poly (methylmethacrylate) (PMMA), polypropylene, polyethylene, and polycarbonate. Accordingly, in a secondary battery including the positive electrode, since the polymer layer may be dissolved in an electrolyte solution contained in the secondary battery, an increase in resistance of the battery may be prevented. Particularly, the polymer layer may include PMMA, and, in this case, the above-described effect may be further improved.

In the positive electrode, the positive electrode active material layer may have a porosity of 10% to 40%, particularly 15% to 35%, and more particularly 25% to 30%. In this case, no additional thickness change may occur during rolling.

### <Method of Preparing Positive Electrode>

A method of preparing a positive electrode according to another aspect of the present disclosure includes a step P1 of disposing a transfer stack, which includes a base film and a lithium metal layer disposed on the base film, on a preliminary positive electrode including a preliminary positive electrode active material layer to form a positive electrode structure such that the lithium metal layer and the preliminary positive electrode active material layer are in contact with each other; a step P2 of rolling the positive electrode structure; and a step P3 of preparing a positive electrode by removing the base film from the transfer stack after the rolling, wherein a pressure applied to the positive electrode structure during the rolling may be in a range of 10 kgf/cm to 90 kgf/cm.

### (1) Step P1

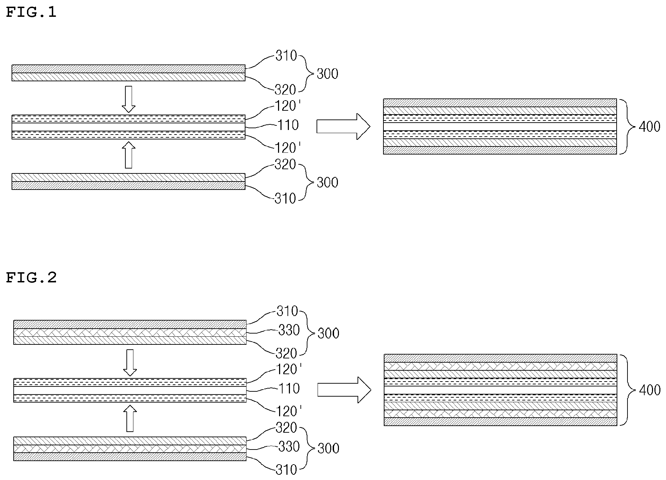

Referring to FIG. 1, a transfer stack 300 may include a base film 310 and a lithium metal layer 320 disposed on the base film 310. The base film 310 may be used without limitation as long as it is a material which may withstand high-temperature conditions that occur in a process of depositing the lithium metal layer 320 on the base film 310. Specifically, the base film may include at least one selected from the group consisting of polyethylene terephthalate (PET), polyimide (PI), poly (methylmethacrylate) (PMMA), polypropylene, polyethylene, and polycarbonate.

The lithium metal layer may be disposed on the base film. The lithium metal layer plays a role in supplying lithium ions to the preliminary positive electrode active material layer. The lithium metal layer includes solid-phase lithium metal, and the lithium metal layer may specifically be formed of solid-phase lithium metal.

In the transfer stack, the lithium metal layer may have a thickness of 1.0 µm to 10.0 µm, particularly 3.0 µm to 9.0 µm, and more particularly 4.0 µm to 6.5 µm. In a case in which the above range is satisfied, since a degree of cracking of the positive electrode active material particles on a surface of the positive electrode may be reduced, a decrease in initial capacity of the battery may be suppressed.

A loading amount (unit: mAh/cm²) of the lithium metal layer may be 4% to 40% of a loading amount (unit: mAh/cm²) of the preliminary positive electrode active material layer, and may specifically be 12% to 35%, more specifically, 20% to 30%. When the above range is satisfied, since the generation of the by-product is small and lithium may be easily intercalated into the positive electrode active material, target lithium intercalation capacity may be easily achieved.

In step P1, referring to FIG. 1, a preliminary positive electrode active material layer 120' is disposed on a positive electrode collector 110, and the transfer stack 300 may be disposed on the preliminary positive electrode active material layer 120' to form a positive electrode structure 400 such that the lithium metal layer 320 and the preliminary positive electrode active material layer are in contact with each other.

Herein, the positive electrode collector 110 is the same as the positive electrode collector described in the aspect related to the above-described positive electrode.

Referring to FIG. 2, the transfer stack 300 may further include a polymer layer 330. The polymer layer 330 may be disposed between the base film 310 and the lithium metal layer 320. The polymer layer may play a role in effectively peeling off the lithium metal layer from the transfer stack and allowing the lithium metal layer to be easily transferred to the positive electrode active material layer during the preparation of the positive electrode. That is, the polymer layer may be separated from the transfer stack together with the lithium metal layer to be disposed on the positive electrode active material layer. The polymer layer may exist in contact with the positive electrode active material layer, and alternatively, the lithium metal layer may exist between the polymer layer and the positive electrode active material layer.

The polymer layer may be at least one selected from the group consisting of polyethylene terephthalate (PET), polyimide (PI), poly (methylmethacrylate) (PMMA), polypropylene, polyethylene, and polycarbonate. Accordingly, in a secondary battery including the positive electrode, since the polymer layer may be dissolved in an electrolyte solution contained in the secondary battery, an increase in resistance of the battery may be prevented. Particularly, the polymer layer may include PMMA, and, in this case, the above-described effect may be further improved.

The polymer layer may have a thickness of 0.1 µm to 10.0 µm, particularly 0.5 µm to 5.0 µm, and more particularly 1.0 µm to 2.5 µm. In a case in which the above range is satisfied, the lithium metal layer may be easily transferred to the positive electrode active material layer, and a reverse transfer phenomenon, in which the positive active material layer is transferred to the transfer stack, may be prevented.

### (2) Step P2

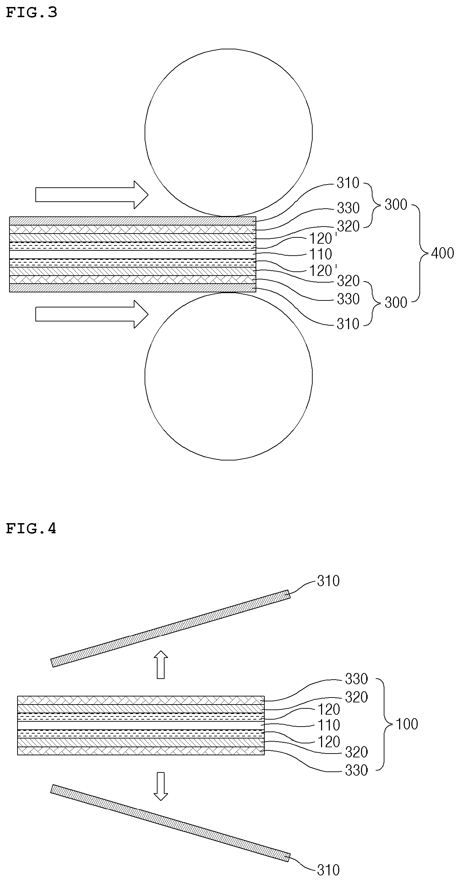

Referring to FIG. 3, in step P2, the prepared positive electrode structure 400 may be rolled. The rolling may be performed by a roll press method. Specifically, through two rolls R spaced apart from each other with a predetermined space in a vertical direction, a pressure may be applied in the vertical direction to the positive electrode structure 400 passing through the space, and the pressure may be a linear pressure. Through the rolling process, at least a portion of the lithium ions of the lithium metal layer included in the transfer stack may be intercalated into the preliminary positive electrode active material layer. In this process, the preliminary positive electrode active material layer may become a positive electrode active material layer. In FIGS. 3 and 4, it was illustrated that the lithium metal layer is included in the positive electrode, but, in a case in which the entire lithium metal layer is intercalated into the preliminary positive electrode active material layer during the rolling process, the lithium metal layer may not exist as a separate layer.

The pressure applied to the positive electrode structure during the rolling may be in a range of 10 kgf/cm to 90 kgf/cm, particularly 15 kgf/cm to 80 kgf/cm, and more particularly 20 kgf/cm to 60 kgf/cm, and may more preferably be in a range of 20 kgf/cm to 50 kgf/cm.

If the pressure during rolling is less than 10 kgf/cm, since the lithium metal layer of the transfer stack is not effectively transferred to the positive electrode during the preparation of the positive electrode, it difficult to intercalate lithium into the positive electrode at a desired level. For example, if the pressure during rolling is less than 10 kgf/cm, the I_{[003]}/I_{[200]} may be greater than 2.0. Accordingly, because the amount of lithium transferred to the negative electrode during the activation process is decreased and the large amount of the lithium by-products is generated due to the lithium remaining on the surface without diffusing into the active material layer, it is difficult to improve the life characteristics of the battery, and the resistance of the electrode may also be increased.

In contrast, if the pressure during rolling is greater than 90 kgf/cm, since the diffusion rate of the lithium is excessive, the cracking of the positive electrode active material may excessively occur, and, accordingly, the positive electrode capacity may be reduced and the life characteristics of the battery may be degraded. Also, even in this case, there is a problem of increase in the damaged positive electrode active material, a large amount of the lithium by-products may be formed due to the side reaction, in which the Li₂MO₂ crystal is decomposed into Li₂O and MO, to reduce the capacity of the positive electrode and degrade the long-term life characteristics of the battery, and problems, such as a reduction in capacity, an increase in resistance, and a decrease in lifetime, may occur as the rock-salt phase is also increased. For example, if the pressure during rolling is greater than 90 kgf/cm, the I_{[003]}/I_{[200]} may be less than 1.2.

### (3) Step P3

Referring to FIG. 4, in step P3, a positive electrode 100 may be prepared by removing the base film 310 from the transfer stack after the rolling performed in step P2. In a case in which the polymer layer 330 is disposed between the base film 310 and the lithium metal layer 320, the base film 310 may be more easily removed by the polymer layer 330.

Also, the method of preparing a positive electrode may further include a step P4 of resting (leaving alone) the preliminary positive electrode for 1 minute to 600 minutes, specifically, 1 minute to 30 minutes. Step P4 may be performed after step P2. Specifically, step P4 may be performed in at least one step of 'between step P2 and step P3' and 'immediately after step P3'. Since reaction heat, which has been generated by a reaction of the lithium metal layer and the preliminary positive electrode active material layer in step P2, may be effectively released by step P4, lithium is uniformly intercalated into the positive electrode, and thus, there is an effect of reducing the generation of the by-product.

Since the prepared positive electrode is the same as the positive electrode of the above-described aspect, a detailed description thereof will be omitted.

In the method of preparing a positive electrode of the present aspect, the lithium metal layer is disposed on the positive electrode through a transfer method, and rolling is performed at a pressure of 10 kgf/cm to 90 kgf/cm to intercalate the lithium ions of the lithium metal layer into the preliminary positive electrode active material layer. Accordingly, a by-product containing lithium, such as Li₃N, is generated in the positive electrode, and the positive electrode satisfies 1.2 ≤ I_{[003]}/I_{[200]} ≤ 2.0. If a preliminary secondary battery is prepared by using the positive electrode that is prepared by the method as described above and the preliminary secondary battery is activated, since the lithium ions intercalated into the positive electrode are transferred to the negative electrode, the lithium ions react and fill irreversible sites of the negative electrode. Accordingly, an amount of the lithium ions intercalated into the negative electrode during battery operation may be suitably reduced to a level required for the battery operation. Thus, since an available range of negative electrode capacity may be reduced while maintaining capacity of the battery, an excessive volume change of silicon-based active material particles may be suppressed and the life characteristics of the battery may be improved. One of the characteristics of the present disclosure is that pre-lithiation is not performed by typically contacting the lithium metal layer to the negative electrode, but the lithium metal layer is transferred to the positive electrode and rolled, and the lithium ions intercalated into the positive electrode are then transferred to the negative electrode in an activation process of the battery. That is, the negative electrode and the lithium metal layer are not in contact, and the lithium ions are not directly intercalated into the negative electrode from the lithium metal layer. Thus, a phenomenon of excessive heat generation due to an alloy reaction of lithium and silicon at the negative electrode may be avoided and a possibility of ignition due to a reaction between the lithium and moisture may be significantly reduced. Furthermore, since the lithium ions are not intercalated into the negative electrode during notching and punching the negative electrode (because the pre-lithiation has not progressed), a possibility of ignition during the notching and punching process may be significantly reduced.

Above all, since the lithium ions of the lithium metal layer are intercalated into the positive electrode active material layer at the appropriate level of pressure (10 kgf/cm to 90 kgf/cm) during the preparation of the positive electrode, the degree of cracking of the positive electrode active material may be reduced, and thus, the life characteristics and energy density of the lithium ion secondary battery may be improved. Also, since excessive generation of the lithium by-product may be suppressed to reduce the amount of lithium loss, the long-term life characteristics of the battery may be improved.

### <Lithium Ion Secondary Battery>

A lithium ion secondary battery according to an aspect of the present disclosure includes a positive electrode; a negative electrode; a separator disposed between the positive electrode and the negative electrode; and the electrolyte, wherein the positive electrode includes a positive electrode active material layer including a positive electrode active material, and the positive electrode may satisfy Equation 1 below. [Equation 1] $1.2 \leq {I}_{\left[003\right]} {/ I}_{\left[200\right]} \leq 2.0$

In Equation 1, I_{[003]} is an integral value of a maximum peak that appears in a 2θ range of 17.0° to 19.0° during XRD measurement on a surface of the positive electrode active material layer, and I_{[200]} is an integral value of a maximum peak that appears in a 2θ range of 43° to 45° during the XRD measurement on the surface of the positive electrode active material layer.

Since the positive electrode is the same as the positive electrode of the above-described aspect, a description thereof will be omitted.

The negative electrode includes a negative electrode active material layer, and the negative electrode active material layer may include a negative electrode active material.

The negative electrode active material may include a silicon-based negative electrode active material. The silicon-based negative electrode active material may include at least one of Si and SiOₓ (0<x<2).

The Si is silicon particles, wherein it may be silicon particles (particles formed of silicon), so-called Pure Silicon. The silicon particles may effectively improve the capacity of the negative electrode. The SiOₓ (0<x<2) may be in a form including Si and SiO₂, and the Si may constitute a phase. That is, x corresponds to a number ratio of oxygen (O) to Si included in the SiOₓ (0<x<2). In a case in which the silicon-based composite particle includes the SiOₓ (0<x<2), discharge capacity of the secondary battery may be improved.

The positive electrode included in the lithium ion secondary battery of this aspect may satisfy Equation 1 above, wherein it means that the positive electrode is prepared by the method of preparing a positive electrode of the above-described aspect and, particularly, lithium is transferred to the positive electrode at an appropriate level of pressure. Furthermore, the fact that the positive electrode satisfies Equation 1 has greater significance in a case where the negative electrode includes the silicon-based negative electrode active material. If the positive electrode, which is prepared by the above-described method of preparing a positive electrode, is included in a secondary battery and is then subjected to an activation process, since predetermined lithium ions are transferred from the positive electrode to the silicon-based negative electrode active material of the negative electrode, an excessive volume change of the silicon-based active material during battery operation may be suppressed and life characteristics of the battery may be improved. Furthermore, since a separate lithium metal layer is not transferred to the negative electrode, the negative electrode and the lithium metal layer are not in contact with each other and the lithium ions are not directly intercalated into the negative electrode from the lithium metal layer. Thus, the phenomenon of excessive heat generation due to the alloy reaction of lithium and silicon at the negative electrode may be avoided and the possibility of ignition due to the reaction between the lithium and moisture may be significantly reduced. Furthermore, since the lithium ions are not intercalated into the negative electrode during notching and punching the negative electrode (because the pre-lithiation has not progressed), the possibility of ignition during the notching and punching process may be significantly reduced.

The negative electrode active material may further include a carbon-based negative electrode active material. The carbon-based negative active material may include at least one selected from the group consisting of artificial graphite, natural graphite, and graphitized meso-carbon microbeads.

The negative electrode active material layer may further include a negative electrode binder. The negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylate, an ethylene-propylene-diene monomer (EPDM), a sulfonated EPDM, a styrene-butadiene rubber (SBR), a fluorine rubber, poly acrylic acid, and a material having hydrogen thereof substituted with lithium (Li), sodium (Na), or calcium (Ca), or may include various copolymers thereof.

The negative electrode active material layer may further include a negative electrode conductive agent. The negative electrode conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; fluorocarbon powder; metal powder such as aluminum powder, and nickel powder; conductive whiskers such as zinc oxide whiskers and potassium titanate whiskers; conductive metal oxide such as titanium oxide; or polyphenylene derivatives may be used.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present disclosure is not limited thereto.

Specifically, the electrolyte may include a non-aqueous organic solvent and a metal salt.

Examples of the non-aqueous organic solvent may be aprotic organic solvents, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate.

Particularly, ring-type carbonates among the carbonate-based organic solvents, such as ethylene carbonate and propylene carbonate, well dissociate a lithium salt in the electrolyte solution due to high dielectric constants as high-viscosity organic solvents, and thus, the ring-type carbonate may be preferably used. Since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte solution, wherein, for example, at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

At least one additive, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving the life characteristics of the battery, suppressing a decrease in battery capacity, and improving discharge capacity of the battery.

### <Method of Preparing Lithium Ion Secondary Battery>

A method of preparing a lithium ion secondary battery according to an aspect of the present disclosure includes a step B1 of preparing a preliminary lithium ion secondary battery which includes a positive electrode; a negative electrode; a separator disposed between the positive electrode and the negative electrode; and an electrolyte; and a step B2 of activating the preliminary lithium ion secondary battery, wherein a method of preparing the positive electrode includes a step P1 of disposing a transfer stack, which includes a base film and a lithium metal layer disposed on the base film, on a preliminary positive electrode including a preliminary positive electrode active material layer to form a positive electrode structure such that the lithium metal layer and the preliminary positive electrode active material layer are in contact with each other; a step P2 of rolling the positive electrode structure; and a step P3 of removing the base film from the transfer stack after the rolling, wherein a pressure applied to the positive electrode structure during the rolling may be in a range of 10 kgf/cm to 90 kgf/cm.

Herein, the secondary battery may be the same as the secondary battery in the above-described aspect.

Since the positive electrode is the same as the positive electrode of the above-described aspect and the method of preparing the positive electrode is the same as the above-described method of preparing a positive electrode, a description thereof will be omitted.

Since the negative electrode is the same as the negative electrode of the above-described aspect, a description thereof will be omitted.

In step B1, the preliminary lithium ion secondary battery may include a positive electrode and a negative electrode. Specifically, the preliminary lithium ion secondary battery may include a positive electrode, a negative electrode, a separator, and an electrolyte. Specifically, the positive electrode and the negative electrode are spaced apart from each other with the separator disposed therebetween and stacked, and may be impregnated with the electrolyte. The negative electrode before being subjected to the activation process may be a preliminary negative electrode, and means a state in which lithium ions have not yet been intercalated. The preliminary lithium ion secondary battery refers to a battery before being subjected to an activation process.

The method of preparing the positive electrode may further include a step P4 of resting (leaving alone) the preliminary positive electrode for 1 minute to 600 minutes, specifically, 1 minute to 30 minutes. Step P4 may be performed after step P2. Specifically, step P4 may be performed in at least one step of 'between step P2 and step P3' and 'immediately after step P3'. Since the reaction heat, which has been generated by the reaction of the lithium metal layer and the preliminary positive electrode active material layer in step P2, may be effectively released by step P4, lithium is uniformly intercalated into the positive electrode, and thus, there is an effect of reducing the generation of the by-product.

Step B2 may include applying a current to the preliminary lithium ion secondary battery. The preliminary lithium ion secondary battery may be activated by the current, and the lithium ions may be intercalated into the negative electrode to achieve the pre-lithiation of the negative electrode.

According to another aspect of the present disclosure, a battery module including the lithium ion secondary battery as a unit cell and a battery pack including the battery module are provided. Since the battery module and the battery pack include the lithium ion secondary battery having high capacity, high rate capability, and high cycle characteristics, the battery module and the battery pack may be used as a power source of a medium and large sized device selected from the group consisting of an electric vehicle, a hybrid electric vehicle, a plug-in hybrid electric vehicle, and a power storage system.

Hereinafter, preferred examples will be provided for better understanding of the present disclosure. It will be apparent to those skilled in the art that these examples are only provided to illustrate the present disclosure and various modifications and alterations are possible within the scope of the appended claims.

### Examples and Comparative Examples

### Example 1-1: Preparation of Positive Electrode

A transfer stack, which included a PET film (base film), a polymer layer (2.5 µm thick) disposed on the PET film and formed of PMMA, and a lithium metal layer (6 µm thick, loading amount of 1.24 mAh/cm²) disposed on the polymer layer and formed of solid-phase lithium metal, was prepared.

Li[Ni_{0.86}Co_{0.05}Mn_{0.05}Al_{0.01}]O₂ was used as a positive electrode active material. The positive electrode active material was in a form of a secondary particle in which a plurality (10 or more) of Li[Ni_{0.86}Co_{0.05}Mn_{0.08}Al_{0.1}]O₂ primary particles were bonded to each other, and an average particle diameter D₅₀ of the secondary particles was 9 µm. A positive electrode, which included a preliminary positive electrode active material layer including the positive electrode active material, PVdF as a positive electrode binder, and carbon nanotubes, as a positive electrode conductive agent, at a weight ratio of 98:1:1 and an aluminum foil (thickness: 12 µm) as a positive electrode collector, was prepared. The preliminary positive electrode active material layer had a loading amount of 4.5 mAh/cm² and a thickness of 140 µm.

The transfer stack was disposed on the preliminary positive electrode active material layer to allow the lithium metal layer to be in contact with the preliminary positive electrode active material layer.

Thereafter, the positive electrode having the transfer stack disposed thereon was rolled by a roll press method and was then left standing for 24 hours. A pressure during the rolling was 20 kgf/cm. Through this, lithium ions of the lithium metal layer were intercalated into the preliminary positive electrode active material layer to form a positive electrode active material layer. Thereafter, the base film was removed and the rolled positive electrode was left standing for 10 minutes to prepare a positive electrode including the positive electrode collector, the positive electrode active material layer, and the polymer layer.

### Example 1-2: Preparation of Positive Electrode

A positive electrode was prepared in the same manner as in Example 1-1 except that the pressure during the rolling was 50 kgf/cm instead of 20 kgf/cm.

### Example 1-3: Preparation of Positive Electrode

A positive electrode was prepared in the same manner as in Example 1-1 except that the pressure during the rolling was 30 kgf/cm instead of 20 kgf/cm.

### Example 1-4: Preparation of Positive Electrode

A positive electrode was prepared in the same manner as in Example 1-1 except that the pressure during the rolling was 10 kgf/cm instead of 20 kgf/cm.

### Example 1-5: Preparation of Positive Electrode

A positive electrode was prepared in the same manner as in Example 1-1 except that the pressure during the rolling was 90 kgf/cm instead of 20 kgf/cm.

### Comparative Example 1-1: Preparation of Positive Electrode

A positive electrode was prepared in the same manner as in Example 1-1 except that the pressure during the rolling was 5 kgf/cm instead of 20 kgf/cm.

### Comparative Example 1-2: Preparation of Positive Electrode

A positive electrode was prepared in the same manner as in Example 1-1 except that the pressure during the rolling was 120 kgf/cm instead of 20 kgf/cm.

### Comparative Example 1-3: Preparation of Positive Electrode

A positive electrode was prepared in the same manner as in Example 1-1 except that the pressure during the rolling was 100 kgf/cm instead of 20 kgf/cm.

### Comparative Example 1-4: Preparation of Negative Electrode

A transfer stack, which included a PET film (base film), a polymer layer (1 µm thick) disposed on the PET film and formed of PMMA, and a lithium metal layer (3 µm thick, loading amount of 0.6 mAh/cm²) disposed on the polymer layer and formed of solid-phase lithium metal, was prepared.

Silicon particles having an average particle diameter D₅₀ of 5 µm was used as a negative electrode active material. A negative electrode, which included a preliminary negative electrode active material layer including the negative electrode active material, carboxymethylcellulose (CMC) as a negative electrode binder, and carbon nanotubes, as a negative electrode conductive agent, at a weight ratio of 80:10:10, was prepared. The preliminary negative electrode active material layer had a loading amount of 10 mAh/cm² and a thickness of 75 µm.

The transfer stack was disposed on the preliminary negative electrode active material layer to allow the lithium metal layer to be in contact with the preliminary negative electrode active material layer.

Thereafter, the negative electrode having the transfer stack disposed thereon was rolled by a roll-to-roll method and was then left standing for 24 hours. Through this, lithium ions of the lithium metal layer were intercalated into the preliminary negative electrode active material layer to form a negative electrode active material layer. A pressure during the rolling was 50 kgf/cm.

Thereafter, the base film was removed to prepare a negative electrode including a negative electrode collector, the negative electrode active material layer, and the polymer layer.

### Experimental Example 1: I_{[003]}I_{[200]} Measurement

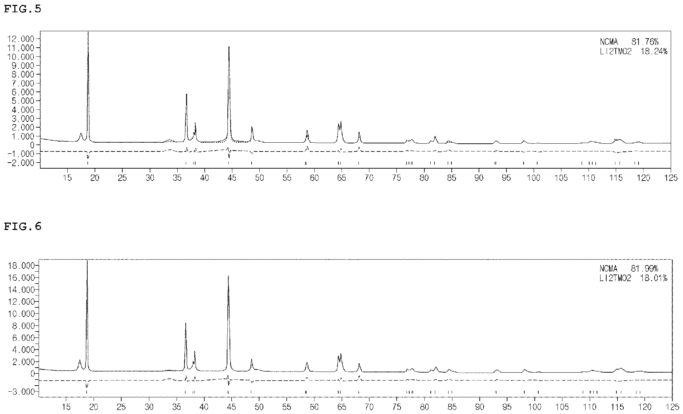

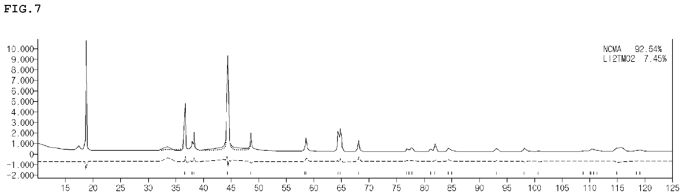

XRD was measured by the following method for Examples 1-1 to 1-5 and Comparative Examples 1-1 to 1-4 to confirm I_{[ 003]}/I_{[200]} and the I_{[003]}/I_{[200]} is presented in Table 1. FIGS. 5, 6, and 7 are graphs of XRD results of Examples 1-1 and 1-2 and Comparative Example 1-2.

An X-ray wavelength generated from Cu Kα was used, and a wavelength (λ) of a light source was 0.15406 nm.
1) Measurement Device and Conditions: Bruker D8 Endeavor (Cu target 40kV, 40mA, 1.54 Å) LynxEye position sensitive detector (4.1° slit)
2) Experimental Process
   2-1) Prep. Cutting/Cross-section: Made a specimen by cutting a sample to a size of a sample holder.
   2-2) Prep. Sample Mounting: Attached the sample (positive electrode) to a glass plate using a double-sided tape such that there was no gap therebetween and then mounted it using rubber clay and a holder formed of PMMA.
   2-3) Powder XRD (Bruker D8 Endeavor): Adjusted a fixed divergence slit (FDS) to 0.5° according to a sample size, and powder XRD was measured every 0.0156° for 0.3 seconds in a 2θ range of 10° to 125°.
   2-4) XRD Phase Analysis: Identified phases present in the sample by comparing them with database (PDF).
   2-5) Rietveld Analysis: Rietveld refinement was performed using a complete structure model of the phases present in the sample.

### Example 2-1: Preparation of Secondary Battery

Silicon particles having an average particle diameter D₅₀ of 5 µm was used as a negative electrode active material. A negative electrode, which included a preliminary negative electrode active material layer including the negative electrode active material, carboxymethylcellulose (CMC) as a negative electrode binder, and carbon nanotubes, as a negative electrode conductive agent, at a weight ratio of 80:10:10, was prepared. The preliminary negative electrode active material layer had a loading amount of 10 mAh/cm² and a thickness of 75 µm.

The positive electrode of Example 1-1, the negative electrode, and a porous polyethylene separator were assembled using a winding method, and a preliminary lithium ion secondary battery was prepared by injecting an electrolyte (ethylene carbonate (EC)/ethylmethyl carbonate (EMC) = 3/7 (volume ratio) and lithium hexafluorophosphate (LiPF₆ 1 mol)) into the assembled battery.

The preliminary lithium ion secondary battery was charged at a C-rate of 0.1 C to 4.2 V and then discharged to 2.5 V to perform an activation process.

### Example 2-2: Preparation of Secondary Battery

A lithium ion secondary battery was prepared in the same manner as in Example 2-1 except that the positive electrode of Example 1-2 was used instead of the positive electrode of Example 1-1.

### Example 2-3: Preparation of Secondary Battery

A lithium ion secondary battery was prepared in the same manner as in Example 2-1 except that the positive electrode of Example 1-3 was used instead of the positive electrode of Example 1-1.

### Example 2-4: Preparation of Secondary Battery

A lithium ion secondary battery was prepared in the same manner as in Example 2-1 except that the positive electrode of Example 1-4 was used instead of the positive electrode of Example 1-1.

### Example 2-5: Preparation of Secondary Battery

A lithium ion secondary battery was prepared in the same manner as in Example 2-1 except that the positive electrode of Example 1-5 was used instead of the positive electrode of Example 1-1.

### Comparative Example 2-1: Preparation of Secondary Battery

A lithium ion secondary battery was prepared in the same manner as in Example 2-1 except that the positive electrode of Comparative Example 1-1 was used instead of the positive electrode of Example 1-1.

### Comparative Example 2-2: Preparation of Secondary Battery

A lithium ion secondary battery was prepared in the same manner as in Example 2-1 except that the positive electrode of Comparative Example 1-2 was used instead of the positive electrode of Example 1-1.

### Comparative Example 2-3: Preparation of Secondary Battery

A lithium ion secondary battery was prepared in the same manner as in Example 2-1 except that the positive electrode of Comparative Example 1-3 was used instead of the positive electrode of Example 1-1.

### Comparative Example 2-4: Preparation of Secondary Battery

Li[Ni_{0.86}Co_{0.05}Mn_{0.08}Al_{0.01}]O₂ was used as a positive electrode active material. The positive electrode active material was in a form of a secondary particle in which a plurality (10 or more) of Li[Ni_{0.86}Co_{0.05}Mn_{0.08}Al_{0.01}]O₂ primary particles were bonded to each other, and an average particle diameter D₅₀ of the secondary particles was 9 µm. A positive electrode was prepared in which a preliminary positive electrode active material layer including the positive electrode active material, PVdF as a positive electrode binder, and carbon nanotubes, as a positive electrode conductive agent, at a weight ratio of 98:1:1 was disposed on an aluminum foil (thickness: 12 µm). The preliminary positive electrode active material layer had a loading amount of 4.5 mAh/cm² and a thickness of 140 µm.

The negative electrode of Comparative Example 1-4, the positive electrode, and a porous polyethylene separator were assembled using a winding method, and a lithium ion secondary battery was prepared by injecting an electrolyte (ethylene carbonate (EC)/ethylmethyl carbonate (EMC) = 1/2 (volume ratio) and lithium hexafluorophosphate (LiPF₆ 1 mol)) into the assembled battery.

### Experimental Example 2: Measurement of Amount of Lithium Loss

An amount of lithium loss was measured for the lithium ion secondary batteries of Examples 2-1 to 2-5 and Comparative Examples 2-1 to 2-4 and presented in Table 1.

First, initial charge capacity of the positive electrode into which lithium ions were not transferred and intercalated (the preliminary positive electrode used in Example 1-1), as a control group, and initial charge capacity of the positive electrode of Example 2-1 were measured under the following conditions.

After constant current/constant voltage (CC/CV) charging at 0.1 C to 4.2 V, 0.05 C cut-off
CC discharging at 0.1 C to 2.3 V
Theoretical capacity of the lithium metal layer used in the experiment was 1 mAh/cm².

The amount of lithium loss was calculated using the following formula. 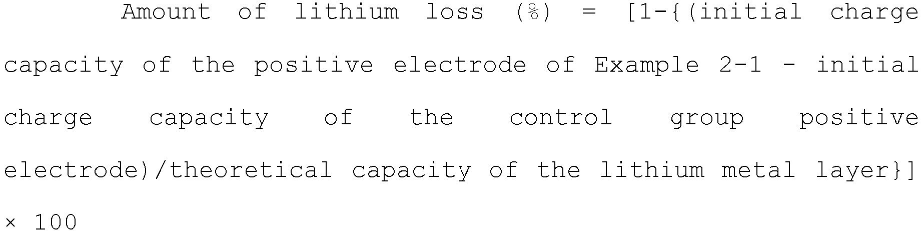 Amount of lithium loss (%) = [1-{ (initial charge capacity of the positive electrode of Example 2-1 - initial charge capacity of the control group positive electrode)/theoretical capacity of the lithium metal layer}] × 100

This method was similarly performed on the remaining examples and Comparative Examples 2-1 to 2-3.

For Comparative Example 2-4, an amount of lithium loss was measured for the negative electrode in the same manner as above.

### Experimental Example 3: Life Characteristics (Capacity Retention) Evaluation

Each of the lithium ion secondary batteries of Examples 2-1 to 2-5 and Comparative Examples 2-1 to 2-4 was charged and discharged to evaluate life characteristics (capacity retention).
Charging conditions: Charged at a current density of 1 C to 4.2 V
Discharging conditions: Discharged at a current rate of 0.5 C to 2.5 V

Each capacity retention was derived by the following calculation. 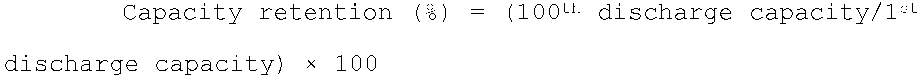 Capacity retention (%) = (100th discharge capacity/1st discharge capacity) × 100

**[Table 1]**

| Positive electrode | I_{[003]}/I_{[200]} | Battery | Amount of lithium loss (%) | Capacity retention (%) |
|---|---|---|---|---|
| Example 1-1 | 1.52 | Example 2-1 | 14.2 | 99.8 |
| Example 1-2 | 1.24 | Example 2-2 | 16.3 | 99.6 |
| Example 1-3 | 1.45 | Example 2-3 | 15.5 | 99.7 |
| Example 1-4 | 1.58 | Example 2-4 | 14.0 | 99.8 |
| Example 1-5 | 1.22 | Example 2-5 | 19.2 | 98.7 |
| Comparative Example 1-1 | 2.16 | Comparative Example 2-1 | 27.0 | 96.5 |
| Comparative Example 1-2 | 1.16 | Comparative Example 2-2 | 29.3 | 95.5 |
| Comparative Example 1-3 | 1.19 | Comparative Example 2-3 | 28.0 | 95.8 |
| Comparative Example 1-4 (negative electrode) | - | Comparative Example 2-4 | 15.6 | 97.1 |

Referring to Table 1, with respect to the examples rolled at a pressure that satisfied a range of 10 kgf/cm to 90 kgf/cm during rolling, it may be understood that I_{[003]}/I_{[200]} satisfied a range of 1.2 to 2.0, the amount of lithium loss was low, and the capacity retention was high, and it may be understood that, in comparison to Comparative Example 2-4 in which pre-lithiation was performed directly on the negative electrode, safety and process advantages may be secured and excellent effects may also be expected at the same time. In contrast, with respect to Comparative Example 2-1 in which the rolling pressure applied was 5 kgf/cm, it may be understood that relatively less rock-salt phase was formed than the examples, but the amount of lithium loss was doubled due to the generation of a large amount of lithium by-product, and, accordingly, it may be confirmed that life characteristics were also degraded. Also, Comparative Examples 2-2 and 2-3, in which the rolling pressure applied was greater than 90 kgf/cm, exhibited a large amount of lithium loss, but this was due to a cracking phenomenon of the positive electrode active material particles and decomposition of a Li₂MO₂ phase caused by overlithiation, wherein it may be understood from the fact that I_{[003]}/I_{[200]} had a value smaller than 1.2, and, accordingly, it may be understood that life characteristics were also degraded.

### [Description of the Symbols]

110: Positive Electrode Collector
120, 120': Preliminary Positive Electrode Active Material Layer
300: Transfer Stack
310: Base Film
320: Lithium Metal Layer
330: Polymer Layer
400: Positive Electrode Structure
R: Roll

## Claims

1. A positive electrode comprising a positive electrode active material layer that includes a positive electrode active material, and
satisfying Equation 1. [Equation 1] $1.2 \leq {I}_{\left[003\right]} {/ I}_{\left[200\right]} \leq 2.0$ wherein, in Equation 1,
I_{[003]} is an integral value of a maximum peak that appears in a 2θ range of 17.0° to 19.0° during XRD (X-ray diffraction) measurement on a surface of the positive electrode active material layer, and
I_{[200]} is an integral value of a maximum peak that appears in a 2θ range of 43° to 45° during the XRD measurement on the surface of the positive electrode active material layer,
wherein I_{[003]} and I_{[200]} are measured as described in the specification,
wherein the positive electrode active material comprises a layer-structured lithium nickel-based transition metal composite oxide, and the lithium nickel-based transition metal composite oxide comprises a compound of Formula 1.
[Formula 1] Li₁₊ₓ[NiₐCo_{b}Mn_{c}M¹_{(1-a-b-c)}]O_{(2-d)}A_{d}
wherein, in Formula 1,
M¹ is at least one selected from the group consisting of aluminum (Al), magnesium (Mg), chromium (Cr), titanium (Ti), silicon (Si), and yttrium (Y),
A is at least one selected from the group consisting of fluorine (F), phosphorus (P), and chlorine (Cl), and
-0.5≤x≤0.5, 0.6≤a<1, 0.03≤b≤0.1, 0.03≤c≤0.1, 0≤d≤0.1, and 0<a+b+c≤1.

2. The positive electrode of claim 1, wherein the positive electrode active material layer comprises at least one selected from the group consisting of Li₃N, Li₂CO₃, and LiOH.

3. The positive electrode of claim 1, wherein the lithium nickel-based transition metal composite oxide has a D₅₀ of 5 µm to 15 µm as measured using a laser diffraction method.

4. The positive electrode of claim 1, wherein the lithium nickel-based transition metal composite oxide is in a form of a secondary particle in which a plurality of primary particles are bonded to each other.

5. The positive electrode of claim 1, further comprising at least one layer selected from a lithium metal layer and a polymer layer which are disposed on the positive electrode active material layer.

6. A method of preparing a positive electrode as defined in claim 1, the method comprising:
a step P1 of disposing a transfer stack, which includes a base film and a lithium metal layer disposed on the base film, on a preliminary positive electrode including a preliminary positive electrode active material layer to form a positive electrode structure such that the lithium metal layer and the preliminary positive electrode active material layer are in contact with each other;
a step P2 of rolling the positive electrode structure; and
a step P3 of removing the base film from the transfer stack after the rolling,
wherein a pressure applied to the positive electrode structure during the rolling is in a range of 10 kgf/cm to 90 kgf/cm.

7. The method of claim 6, wherein, in step P2,
the rolling is performed by a roll press method.

8. The method of claim 6, wherein the lithium metal layer has a thickness of 1 µm to 10 µm.

9. The method of claim 6, wherein a loading amount of the lithium metal layer is 4% to 40% of a loading amount of the preliminary positive electrode active material layer.

10. The method of claim 6, wherein the transfer stack further comprises a polymer layer, and
the polymer layer is disposed between the base film and the lithium metal layer.

11. The method of claim 10, wherein the polymer layer comprises at least one selected from the group consisting of polyethylene terephthalate, polyimide, poly(methylmethacrylate), polypropylene, polyethylene, and polycarbonate.

12. A lithium secondary battery comprising a positive electrode; a negative electrode; a separator disposed between the positive electrode and the negative electrode; and an electrolyte,
wherein the positive electrode is the positive electrode as defined in claim 1.

13. The lithium secondary battery of claim 12, wherein the negative electrode comprises a negative electrode active material layer, and
the negative electrode active material layer comprises a silicon-based negative electrode active material.

14. The lithium secondary battery of claim 12, wherein the silicon-based negative electrode active material is pure silicon (Si).

## Patentansprüche

1. Positive Elektrode, die eine Positivelektrodenaktivmaterialschicht umfasst, welche ein Positivelektrodenaktivmaterial enthält und
die Gleichung 1 erfüllt. [Gleichung 1] $1 , 2 \leq {I}_{\left[003\right]} {/ I}_{\left[200\right]} \leq 2 , 0$ worin, in Gleichung 1,
I_{[003]} der Integralwert eines Maximalpeaks ist, der während einer Röntgendiffraktionsmessung (XRD) an der Oberfläche des Positivelektrodenaktivmaterials in einem 2θ-Bereich von 17,0° bis 19,0° auftritt, und
I_{[200]} ein Integralwert eines Maximalpeaks ist, der während der XRD-Messung an der Oberfläche des Positivelektrodenaktivmaterials in einem 2θ-Bereich von 43° bis 45° auftritt,
wobei I_{[003]} und I_{[200]} wie in der Beschreibung angegeben gemessen werden,
wobei das Positivelektrodenaktivmaterial ein schichtstrukturiertes Lithium-Nickel-basiertes Übergangsmetall-Verbundoxid umfasst, und das Lithium-Nickelbasierte Übergangsmetall-Verbundoxid eine Verbindung der Formel 1 umfasst.
[Formel 1] Li₁₊ₓ[NiₐCo_{b}Mn_{c}M¹_{(1-a-b-c)}]O_{(2-d)}A_{d}
worin, in Formel 1,
M¹ mindestens ein Element ist, ausgewählt aus der Gruppe bestehend aus Aluminium (Al), Magnesium (Mg), Chrom (Cr), Titan (Ti), Silizium (Si) und Yttrium (Y),
A mindestens ein Element ist, ausgewählt aus der Gruppe bestehend aus Fluor (F), Phosphor (P) und Chlor (Cl), und
-0,5 ≤ x ≤ 0,5, 0,6 ≤ a < 1, 0,03 ≤ b ≤ 0,1, 0,03 ≤ c ≤ 0,1, 0 ≤ d ≤ 0,1 und 0 < a + b + c ≤ 1.

2. Positive Elektrode gemäß Anspruch 1, wobei das Positivelektrodenaktivmaterial mindestens eine Verbindung umfasst, ausgewählt aus der Gruppe bestehend aus Li₃N, Li₂CO₃ und LiOH.

3. Positive Elektrode gemäß Anspruch 1, wobei das Lithium-Nickel-basierte Übergangsmetall-Verbundoxid einen D₅₀-Wert von 5 µm bis 15 µm aufweist, gemessen mittels eines Laserbeugungsverfahrens.

4. Positive Elektrode gemäß Anspruch 1, wobei das Lithium-Nickel-basierte Übergangsmetall-Verbundoxid in Form eines Sekundärpartikels vorliegt, in welchem mehrere Primärpartikel miteinander verbunden sind.

5. Positive Elektrode gemäß Anspruch 1, die ferner mindestens eine Schicht umfasst, ausgewählt aus einer Lithiummetallschicht und einer Polymerschicht, welche auf der Positivelektrodenaktivmaterialschicht angeordnet sind.

6. Verfahren zur Herstellung einer positiven Elektrode gemäß Anspruch 1, wobei das Verfahren umfasst:
einen Schritt P1 des Aufbringens eines Transferstapels, der einen Basisfilm und eine auf dem Basisfilm angeordnete Lithiummetallschicht enthält, auf eine vorläufige positive Elektrode, die eine vorläufige Positivelektrodenaktivmaterialschicht enthält, um eine positive Elektrodenstruktur zu bilden, sodass die Lithiummetallschicht und die vorläufige Positivelektrodenaktivmaterialschicht miteinander in Kontakt stehen;
einen Schritt P2, bei dem die positive Elektrodenstruktur gewalzt wird; und
einen Schritt P3, bei dem der Basisfilm nach dem Walzen aus dem Transferstapel entfernt wird,
wobei ein während des Walzens auf die positive Elektrodenstruktur ausgeübter Druck in einem Bereich von 10 kgf/cm bis 90 kgf/cm liegt.

7. Verfahren gemäß Anspruch 6, bei dem in Schritt P2 das Walzen mittels eines Walzpressverfahrens durchgeführt wird.

8. Verfahren gemäß Anspruch 6, bei dem die Lithiummetallschicht eine Dicke von 1 µm bis 10 µm aufweist.

9. Verfahren gemäß Anspruch 6, bei dem die Einbringmenge der Lithiummetallschicht 4 % bis 40 % der Einbringmenge der vorläufigen Positivelektrodenaktivmaterialschicht beträgt.

10. Verfahren gemäß Anspruch 6, wobei der Transferstapel ferner eine Polymerschicht umfasst, und
die Polymerschicht zwischen dem Basisfilm und der Lithiummetallschicht angeordnet ist.

11. Verfahren gemäß Anspruch 10, wobei die Polymerschicht mindestens eines umfasst, ausgewählt aus der Gruppe bestehend aus Polyethylenterephthalat, Polyimid, Poly(methylmethacrylat), Polypropylen, Polyethylen und Polycarbonat.

12. Lithium-Sekundärbatterie, umfassend eine positive Elektrode; eine negative Elektrode; einen zwischen der positiven Elektrode und der negativen Elektrode angeordneten Separator; und einen Elektrolyten,
wobei die positive Elektrode die gemäß Anspruch 1 definierte positive Elektrode ist.

13. Lithium-Sekundärbatterie gemäß Anspruch 12, wobei die negative Elektrode eine Negativelektrodenaktivmaterialschicht umfasst, und
die Negativelektrodenaktivmaterialschicht ein Negativelektrodenaktivmaterial auf Siliziumbasis umfasst.

14. Lithium-Sekundärbatterie gemäß Anspruch 12, wobei das Negativelektrodenaktivmaterial reines Silizium (Si) ist.

## Revendications

1. Électrode positive comprenant une couche de matériau actif d'électrode positive qui inclut un matériau actif d'électrode positive, et
satisfaisant à l'équation 1. [Equation 1] $1 , 2 \leq {I}_{\left[003\right]} / {I}_{\left[200\right]} \leq 2 , 0$ dans laquelle, dans l'équation 1,
I_{[003]} est une valeur intégrale d'un pic maximal qui apparaît dans une plage de 2θ de 17,0° à 19,0° lors d'une mesure de DRX (diffraction des rayons X) sur une surface de la couche de matériau actif d'électrode positive, et
I_{[200]} est une valeur intégrale d'un pic maximal qui apparaît dans une plage de 2θ de 43° à 45° lors de la mesure de DRX sur la surface de la couche de matériau actif d'électrode positive,
dans laquelle I_{[003]} et I_{[200]} sont mesurés comme décrit dans la spécification,
dans laquelle le matériau actif d'électrode positive comprend un oxyde composite de métal de transition au lithium à base de nickel et à structure lamellaire et l'oxyde composite de métal de transition au lithium à base de nickel comprend un composé selon la formule 1.
[Formule 1] Li₁₊ₓ[NiₐCo_{b}Mn_{c}M¹_{(1-a-b-c)}]O_{(2-d)}A_{d}
dans laquelle, dans la Formule 1,
M¹ est au moins un élément sélectionné dans le groupe constitué de l'aluminium (Al), du magnésium (Mg), du chrome (Cr), du titane (Ti), du silicium (Si), et de l'yttrium (Y),
A est au moins un élément sélectionné dans le groupe constitué du fluor (F), du phosphore (P), et du chlore (Cl), et
-0,5≤x≤0,5, 0,6≤a<1, 0,03≤b≤0,1, 0,03≤c≤0,1, 0≤d≤0,1, et 0<a+b+c≤1.

2. Électrode positive selon la revendication 1, dans laquelle la couche de matériau actif d'électrode positive comprend au moins un élément sélectionné dans le groupe constitué de Li₃N, Li₂CO₃, et LiOH.

3. Électrode positive selon la revendication 1, dans laquelle l'oxyde composite de métal de transition au lithium à base de nickel présente un D₅₀ de 5 µm à 15 µm tel que mesuré au moyen d'une méthode de diffraction laser.

4. Électrode positive selon la revendication 1, dans laquelle l'oxyde composite de métal de transition au lithium à base de nickel est sous une forme d'une particule secondaire dans laquelle une pluralité de particules primaires sont liées les unes aux autres.

5. Électrode positive selon la revendication 1, comprenant en outre au moins une couche sélectionnée parmi une couche de lithium métal et une couche polymère qui sont disposées sur la couche de matériau actif d'électrode positive.

6. Procédé de préparation d'une électrode positive telle que définie dans la revendication 1, le procédé comprenant :
une étape P1 consistant à disposer un empilement de transfert, qui inclut un film de base et une couche de lithium métal disposée sur le film de base, sur une électrode positive préliminaire incluant une couche préliminaire de matériau actif d'électrode positive pour former une structure d'électrode positive de telle sorte que la couche de lithium métal et la couche préliminaire de matériau actif d'électrode positive soient en contact l'une avec l'autre ;
une étape P2 de laminage de la structure d'électrode positive ; et
une étape P3 de retrait du film de base de l'empilement de transfert après le laminage,
dans lequel une pression appliquée à la structure d'électrode positive pendant le laminage est dans une plage de 10 kgf/cm à 90 kgf/cm.

7. Procédé de la revendication 6, dans lequel, à l'étape P2,
le laminage est réalisé par un procédé de pressage par rouleaux.

8. Procédé selon la revendication 6, dans lequel la couche de lithium métal présente une épaisseur de 1 µm à 10 µm.

9. Procédé selon la revendication 6, dans lequel une charge de la couche de lithium métal est de 4 % à 40 % d'une charge de la couche préliminaire de matériau actif d'électrode positive.

10. Procédé selon la revendication 6, dans lequel l'empilement de transfert comprend en outre une couche polymère, et
la couche polymère est disposée entre le film de base et la couche de lithium métal.

11. Procédé selon la revendication 10, dans lequel la couche polymère comprend au moins un sélectionné dans le groupe constitué de téréphtalate de polyéthylène, polyimide, poly (méthacrylate de méthyle), polypropylène, polyéthylène, et polycarbonate.

12. Batterie secondaire au lithium comprenant une électrode positive ; une électrode négative ; un séparateur disposé entre l'électrode positive et l'électrode négative ; et un électrolyte,
dans laquelle l'électrode positive est l'électrode positive telle que définie dans la revendication 1.

13. Batterie secondaire au lithium selon la revendication 12, dans laquelle l'électrode négative comprend une couche de matériau actif d'électrode négative, et
la couche de matériau actif d'électrode négative comprend un matériau actif d'électrode négative à base de silicium.

14. Batterie secondaire au lithium selon la revendication 12, dans laquelle le matériau actif d'électrode négative à base de silicium est du silicium pur (Si).
